# EUROPEAN PATENT SPECIFICATION

(11) **EP 3 609 382 B1**
(45) Date of publication and mention of the grant of the patent: **10.03.2021**
(21) Application number: 18711537.3
(22) Date of filing: 14.03.2018
(51) Int. Cl.: A47L 15/42, A47L 15/48

(54) **A DISHWASHER**
GESCHIRRSPÜLER
LAVE-VAISSELLE

(30) Priority: 11.04.2017 TR 201705358
(43) Date of publication of application: 19.02.2020
(73) Proprietor: Arçelik Anonim Sirketi, 34445 Istanbul (TR)
(72) Inventor: POYRAZ, Onur, 34950 Istanbul (TR); ERSOY, Osman Gokhan, 34950 Istanbul (TR); KUTUK, Erkan, 34950 Istanbul (TR); ALPTEKIN, Ahmet, 34950 Istanbul (TR); SAGLICAN, Emre, 34950 Istanbul (TR)
(86) International application number: PCT/EP2018/056400
(87) International publication number: WO 2018/188883

(56) References cited:
- EP-A1- 3 141 176
- EP-A2- 2 682 036
- WO-A1-2016/177718
- DE-B3-102013 216 741
- DE-B3-102015 222 959

## Description

The present invention relates to a dishwasher comprising a heat pump.

In dishwashers, heat pumps are used to decrease the energy consumption and improve the drying performance. In heat pump dishwashers, the heat pump is composed of the compressor, the condenser, the throttle valve and the evaporator elements. The components of the heat pump are connected via a pipe line and the heat pump operates by means of the cycle fluid in the line. The condenser is a tube bundle having a hot surface and enables the water to be heated by being positioned in the washing liquid of the dishwasher. The evaporator has a cold surface and is positioned so as to contact the ambient air. The evaporator absorbs heat from the environment and provides heat transfer to the compressor and the condenser. Two types of evaporators are used in dishwashers. The water type evaporators absorb heat from the water that passes through the tubes thereof and cools down the water. The air type evaporators absorb heat from the ambient air. The air type evaporator decreases the temperature of the ambient air in the kitchen. When the ambient air temperature is not at a sufficient level, the evaporator cannot absorb the amount of heat required in order to heat the washing liquid. As a result, the washing and drying performance of the dishwasher decreases.

In the state of the art European Patent Application No. EP2728052, a washer is disclosed, comprising a heat pump that provides energy efficiency and that is composed of a plurality of heat exchangers and a compressor.

In the state of the art International Patent Application Document No. WO2015090409, a dishwasher is disclosed, wherein the drying performance is improved, comprising a heat pump composed of a compressor, a plurality of condensers and an evaporator

DE 10 2013 216741 A1 discloses a dishwasher with the features of the preamble of claim 1.

The aim of the present invention is the realization of a dishwasher that provides energy savings.

The dishwasher realized in order to attain the aim of the present invention, is claimed in independent claim 1 and preferred embodiments of the invention are claimed in the dependent claims 2 to 8. body and a washing tub disposed in the body. At least one water tank is arranged between the washing tub and the body. The water kept to be used during the washing process or the excess water not used during the washing process is stored in the water tank. The heat pump is arranged under the washing tub. The heat pump comprises a first heat exchanger, a second heat exchanger and a compressor. The first heat exchanger enables the water used in the washing process to be heated by absorbing heat from the environment. The second heat exchanger transfers the heat transferred from the first heat exchanger to the washing water. The compressor performs the refrigerant cycle between the first heat exchanger and the second heat exchanger.

The dishwasher of the present invention comprises a water pipe arranged on the first heat exchanger. Both ends of the water pipe are connected to the water tank. By means of the water pipe, the water in the water tank is enabled to be circulated through the first heat exchanger.

In an embodiment of the present invention, the dishwasher comprises a plurality of fins arranged on the first heat exchanger and the water pipe arranged in the vicinity of the fins. By means of the fins, the surface area of the first heat exchanger is increased and more heat is enabled to be absorbed from the environment. The water pipe is disposed in the vicinity of the fins. Thus, the heat in the water in the water pipe is easily absorbed by means of the fins.

In an embodiment of the present invention, the dishwasher comprises a fan that enables the ambient air and the hot air generated around the water pipe to be delivered to the fins. The ambient air is blown towards the fins by means of the fan. Thus, the first heat exchanger is enabled to draw an increased amount of heat from the environment. The hot air created on the surface of the pipe by means of the water in the water pipe is delivered to the fins by means of the fan.

In an embodiment of the present invention, the dishwasher comprises a first heater that enables the water tank to be heated. The first heater is arranged in the water tank. Thus, the water delivered to the first heat exchanger is heated and the amount of heat drawn by the first heat exchanger is increased.

In an embodiment of the present invention, the dishwasher comprises a second heater arranged in the water pipe. The second heater may extend along the water pipe. Thus, the temperature of the water that is transferred to the first heat exchanger is enabled to be increased.

In an embodiment of the present invention, the dishwasher comprises the water pipe that is provided with heat insulating materials. Thus, the water moving from the water tank towards the first heat exchanger is prevented from cooling down.

In an embodiment of the present invention, the dishwasher comprises a plurality of water tanks and a plurality of water pipes. Different water pipes connected to different water tanks may be arranged between the fins.

In an embodiment of the present invention, the dishwasher comprises the water pipe that enables the water used in the washing step to be passed through the fins while being discharged from the washing tub. Thus, the first heat exchanger is enabled to draw more heat by passing the water heating up during the washing process through the first heat exchanger.

A dishwasher realized in order to attain the aim of the present invention is illustrated in the attached figures, where:

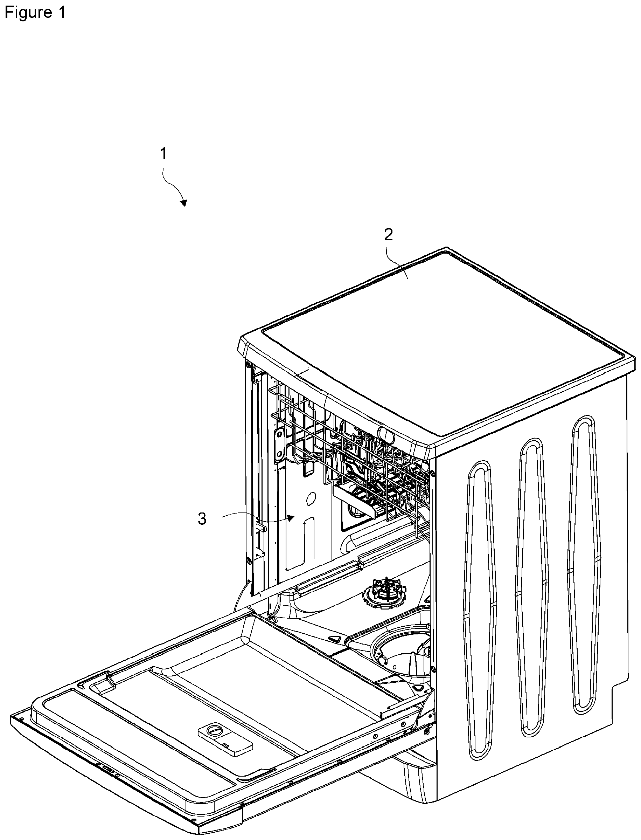

Figure 1 - is the perspective view of the dishwasher.

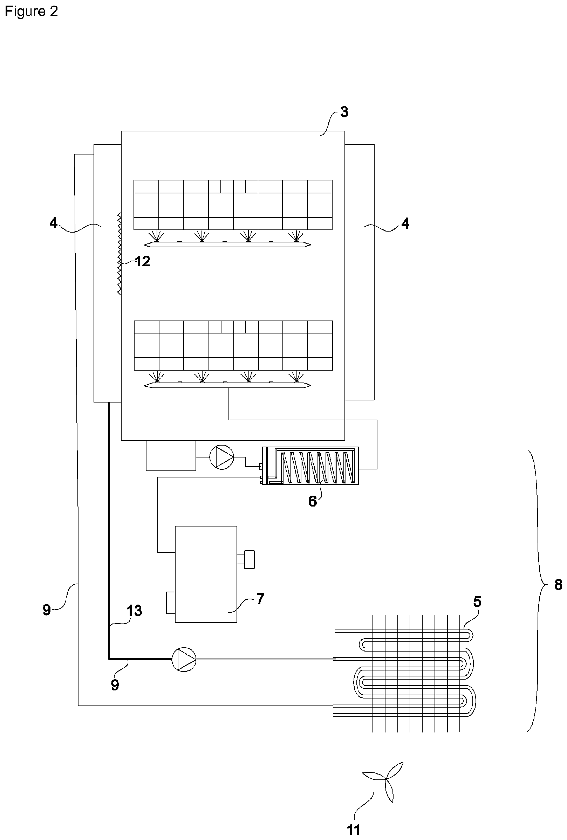

Figure 2 - is the schematic view of the heat pump.

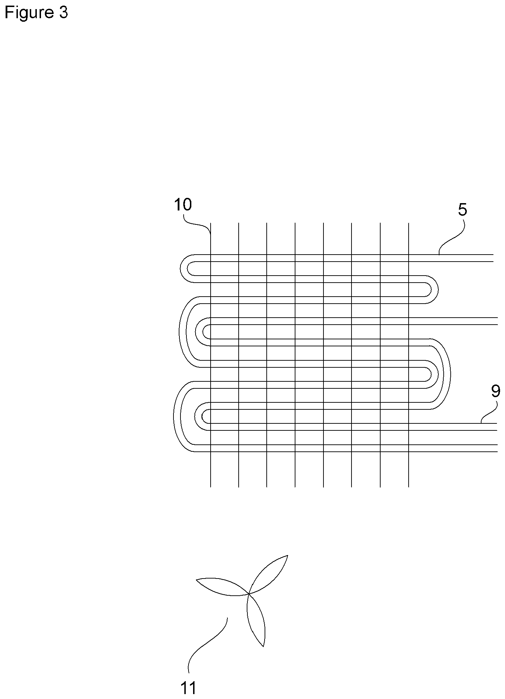

Figure 3 - is the schematic view of the first heat exchanger.

The elements in the figures are numbered as follows:
1. Dishwasher
2. Body
3. Washing tub
4. Water tank
5. First heat exchanger
6. Second heat exchanger
7. Compressor
8. Heat pump
9. Water pipe
10. Fin
11. Fan
12. First heater
13. Second heater

The dishwasher (1) comprises a body (2); a washing tub (3) arranged in the body (2) and wherein the washing process is performed; at least one water tank (4) arranged between the washing tub (3) and the body (2) and wherein the excess water (S) is collected; and a heat pump (8) that is arranged under the washing tub (3) and that has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle. By means of the heat pump (8), the energy consumed during the heating of the washing water is decreased and the drying performance is improved.

The dishwasher of the present invention (1) comprises a water pipe (9) arranged between the channels of the first heat exchanger (5) and through which the water (S) in the water tank (4) is circulated. The water pipe (9) passes through the channels of the first heat exchanger (5). Thus, the first heat exchanger (5) is enabled to draw an increased amount of heat from the environment. The first heat exchanger (5) enables the washing water to be heated by means of the heat absorbed from the environment. Thus, the washing water is heated faster and energy is saved.

In an embodiment of the present invention, the dishwasher (1) comprises a plurality of fins (10) that are arranged on the first heat exchanger (5) and that enable the heat exchange between the air and the first heat exchanger (5) to be improved by increasing the surface area of the first heat exchanger (5), the dishwasher (1) further comprising the water pipe (9) arranged in the vicinity of the fins (10). The heat is drawn from the environment by means of the fins (10). Thus, the heat in the environment is transferred to the washing water. By means of the fins (10), the surface area of the first heat exchanger (5) is increased and the amount of heat drawn from the environment is increased. By positioning the water pipes (9) close to the fins (10), the heat on the wall of the water pipe (9) is enabled to be drawn by means of the fins (10).

In an embodiment of the present invention, the dishwasher (1) comprises a fan (11) that enables the ambient air and the hot air around the water pipe (9) to be transferred to the fins (10). Forced convection is provided by means of the fan (11). Thus, the hot air formed on the wall of the water pipe (9) and the ambient air are directed towards the fins (10) such that the amount of heat drawn by the first heat exchanger (5) is increased.

In an embodiment of the present invention, the dishwasher (1) comprises a first heater (12) that is arranged in the water tank (4) and that enables the water (S) in the water tank (4) to be heated. By means of the first heater (12) arranged in the water tank (4), the water moving from the water tank (4) towards the water pipe (9) is heated. Thus, the temperature of the water to be transferred to the first heat exchanger (5) is increased. Consequently, the washing water is heated more quickly.

In an embodiment of the present invention, the dishwasher (1) comprises a second heater (13) that is arranged on the water pipe (9) and that enables the water (S) in the water pipe (9) to be heated. By means of the second heater (13), the water can be heated when in the water pipe (9).

In an embodiment of the present invention, the dishwasher (1) comprises the water pipe (9) having a heat insulating material so that the temperature of the water (S) is maintained until transferred from the water tank (4) to the first heat exchanger (5). By means of the insulating material, the water does not lose heat while moving from the water tank (4) to the first heat exchanger (5). Thus, the water reaches the first heat exchanger (5) at a higher temperature. Consequently, the first heat exchanger (5) is enabled to draw an increased amount of heat.

In an embodiment of the present invention, the dishwasher (1) comprises a plurality of water pipes (9) that are positioned between the fins (10) and that transfer water (S) at different temperatures from a plurality of water tanks (4). A plurality of water pipes (9) may be arranged on the first heat exchanger (5). Different water pipes (9) may be connected to different water tanks (4).

In an embodiment of the present invention, the dishwasher (1) comprises the water pipe (9) that enables the water used in the washing step to be discharged from the washing tub (3) and passed through the fins (10). The washing water heated during the washing process is directed towards the water pipe (9) before being discharged. Thus, the first heat exchanger (5) is enabled to draw an increased amount of heat by means of the water heated to a higher temperature.

By means of the present invention, an energy efficient dishwasher (1) is realized. The first heat exchanger (5), by means of the fins (10) provided thereon, enables the washing water to be heated with the heat drawn from the environment. By arranging the water pipes (9) between the fins (10) of the first heat exchanger (5), the heat on the walls of the water pipe (9) is enabled to be absorbed by the fins (10). Energy is saved by heating the washing water to higher temperatures in shorter periods of time. Furthermore, the drying performance is increased by means of the air that reaches the washing tub (3) at higher temperatures.

## Claims

1. A dishwasher (1) comprising a body (2); a washing tub (3) arranged in the body (2) and wherein a washing process is performed; at least one water tank (4) arranged between the washing tub (3) and the body (2) and wherein excess water (S) is collected; and a heat pump (8) that is arranged under the washing tank (3) and that has a first heat exchanger (5) enabling washing water to be used in a washing step to be heated by drawing heat from the environment and transferring said heat received from the first heat exchanger (5) to a second heat exchanger (6) to the washing water and a compressor (7) fluidly connected to the first heat exchanger (5) and the second heat exchanger (6) so as to realize the refrigerant cycle, **characterized by** a water pipe (9) arranged between the channels of the first heat exchanger (5) and through which the excess water (S) in the water tank (4) is circulated.

2. A dishwasher (1) as in Claim 1, **characterized by** a plurality of fins (10) that are arranged on the first heat exchanger (5) and that enable the heat exchange between the air and the first heat exchanger (5) to be improved by increasing the surface area of the first heat exchanger (5), and by the water pipe (9) arranged in the vicinity of the fins (10).

3. A dishwasher (1) as in Claim 1 or Claim 2, **characterized by** a fan (11) that enables ambient air and hot air around the water pipe (9) to be transferred to the fins (10).

4. A dishwasher (1) as in any one of the above claims, **characterized by** a first heater (12) that is arranged in the water tank (4) and that enables the excess water (S) in the water tank (4) to be heated.

5. A dishwasher (1) as in any one of the above claims, **characterized by** a second heater (13) that is arranged on the water pipe (9) and that enables the excess water (S) in the water pipe (9) to be heated.

6. A dishwasher (1) as in any one of the above claims, **characterized by** the water pipe (9) having a heat insulating material so that the temperature of the excess water (S) is maintained until transferred from the water tank (4) to the first heat exchanger (5).

7. A dishwasher (1) as in any one of the above claims when depending on claim 2, **characterized by** a plurality of water pipes (9) that are positioned between the fins (10) and that transfer excess water (S) at different temperatures from a plurality of water tanks (4).

8. A dishwasher (1) as in any one of the above claims, **characterized by** the water pipe (9) that enables the water used in the washing step to be discharged from the washing tub (3) and passed through the fins (10).

## Patentansprüche

1. Ein Geschirrspüler (1) umfasst einen Körper (2), eine Waschwanne (3), die in dem Körper (2) angeordnet ist und in der ein Waschvorgang durchgeführt wird; mindestens einen Wassertank (4), der zwischen der Waschwanne (3) und dem Körper (2) angeordnet ist und in dem überschüssiges Wasser (S) gesammelt wird; und eine Wärmepumpe (8), die unter der Waschwanne (3) angeordnet ist und einen ersten Wärmetauscher (5) aufweist, der es ermöglicht, Waschwasser, das in einem Waschschritt verwendet wird, zu erwärmen, indem Wärme aus der Umgebung entnommen und diese Wärme vom ersten Wärmetauscher (5) zu einem zweiten Wärmetauscher (6) zum Waschwasser übertragen wird; und den zweiten Wärmetauscher (6), um den Kältemittelkreislauf zu verwirklichen, **gekennzeichnet ist er dadurch,** dass eine Wasserleitung (9) zwischen den Kanälen des ersten Wärmetauschers (5) angeordnet ist und durch die das überschüssige Wasser (S) in dem Wassertank (4) in Umlauf gebracht wird.

2. Ein Geschirrspüler (1), wie in Anspruch 1 aufgeführt, **ist dadurch gekennzeichnet, dass** mehrere Rippen (10), die auf dem ersten Wärmetauscher (5) angeordnet sind und die es ermöglichen, den Wärmeaustausch zwischen der Luft und dem ersten Wärmetauscher (5) durch Vergrößern der Oberfläche des ersten Wärmetauschers zu verbessern (5) und durch die Wasserleitung (9), die in der Nähe der Rippen (10) angeordnet ist.

3. Ein Geschirrspüler (1), wie in Anspruch 1 oder 2 aufgeführt, **ist dadurch gekennzeichnet, dass** ein Ventilator (11) es ermöglicht, die Umgebungsluft und heiße Luft um die Wasserleitung (9) auf die Rippen (10) zu übertragen.

4. Ein Geschirrspüler (1), wie in einem der vorher aufgeführten Ansprüchen, **ist dadurch gekennzeichnet, dass** ein erster Heizer (12) in dem Wassertank (4) angeordnet ist und ermöglicht das überschüssige Wasser (S) in dem Wassertank (4) ermöglicht zu erhitzen.

5. Ein Geschirrspüler (1), wie in einem der vorher aufgeführten Ansprüchen, **ist dadurch gekennzeichnet, dass** ein zweiter Heizer (13) an der Wasserleitung (9) angeordnet ist und ermöglicht das überschüssige Wasser (S) in der Wasserleitung (9) zu erhitzen.

6. Ein Geschirrspüler (1), wie in einem der vorher aufgeführten Ansprüchen, **ist dadurch gekennzeichnet, dass** eine Wasserleitung (9) mit einem wärmeisolierenden Material die Temperatur des überschüssigen Wassers (S) aufrecht hält, bis sie vom Wassertank (4) zum ersten Wärmetauscher (5) übertragen wird.

7. Ein Geschirrspüler (1), wie in einem der vorher aufgeführten Ansprüchen, **ist dadurch gekennzeichnet, dass** mehrere Wasserleitungen (9) zwischen den Rippen (10) angeordnet sind und überschüssiges Wasser (S) bei unterschiedlichen Temperaturen aus mehreren Wassertanks (4) übertragen.

8. Ein Geschirrspüler (1), wie in einem der vorher aufgeführten Ansprüchen, **ist dadurch gekennzeichnet, dass** die Wasserleitung (9) es ermöglicht, das im Waschschritt verwendete Wasser aus der Waschwanne (3) abzulassen und durch die Rippen (10) zu leiten

## Revendications

1. Un lave-vaisselle (1) **comprenant** un corps (2) ; une cuve de lavage (3) disposée dans le corps (2) et dans laquelle un processus de lavage est effectué ; au moins un réservoir d'eau (4) disposé entre la cuve de lavage (3) et le corps (2) et dans lequel l'eau excédentaire (S) est recueillie ; et une pompe à chaleur (8) qui est disposée sous la cuve de lavage (3) et qui comporte un premier échangeur de chaleur (5) permettant à l'eau de lavage devant être utilisée dans une étape de lavage d'être chauffée en extrayant de la chaleur de l'environnement et en transférant ladite chaleur reçue du premier échangeur de chaleur (5) à un second échangeur de chaleur (6) à l'eau de lavage et un compresseur (7) relié de manière hydraulique au premier échangeur de chaleur (5) et au second échangeur de chaleur (6) de manière à réaliser le cycle du réfrigérant, **est caractérisé en ce que** la conduite d'eau (9) est disposée entre les canaux du premier échangeur de chaleur (5) et à travers laquelle l'eau excédentaire (S) du réservoir d'eau (4) circule.

2. Un lave-vaisselle (1) comme dans la déclaration 1, **est caractérisé en ce qu'**une pluralité d'ailettes (10) sont disposées sur le premier échangeur de chaleur (5) et permettent d'améliorer l'échange de chaleur entre l'air et le premier échangeur de chaleur (5) en augmentant la surface du premier échangeur de chaleur (5), et **en ce que** la conduite d'eau (9) est disposée à proximité des ailettes (10).

3. Un lave-vaisselle (1) comme dans la déclaration 1 ou la déclaration 2, **est caractérisé en ce qu'**un ventilateur (11) permet à l'air ambiant et à l'air chaud autour de la conduite d'eau (9) d'être transféré aux ailettes (10).

4. Un lave-vaisselle (1) comme dans l'une quelconque des déclarations ci-dessus, **est caractérisé en ce qu'**un premier dispositif de chauffage (12) est disposé dans le réservoir d'eau (4) et permet de chauffer l'excès d'eau (S) dans le réservoir d'eau (4).

5. Un lave-vaisselle (1) comme dans l'une des déclarations ci-dessus, **est caractérisé en ce qu'un** second élément chauffant (13) est disposé sur la conduite d'eau (9) et permet de chauffer l'eau excédentaire (S) dans la conduite d'eau (9).

6. Un lave-vaisselle (1) comme dans l'une des déclarations ci-dessus, **est caractérisé en ce que** la conduite d'eau (9) a un matériau d'isolation thermique de sorte que la température de l'eau en excès (S) est maintenue jusqu'à ce qu'elle soit transférée du réservoir d'eau (4) au premier échangeur de chaleur (5).

7. Un lave-vaisselle (1) comme dans l'une des déclarations ci-dessus, selon la déclaration, **est caractérisé en ce qu'**une pluralité de tuyaux d'eau (9) sont placés entre les ailettes (10) et transfèrent l'excès d'eau (S) à différentes températures à partir d'une pluralité de réservoirs d'eau (4).

8. Un lave-vaisselle (1) comme dans chacune des déclarations ci-dessus, **est caractérisé en ce que** la conduite d'eau (9) permet à l'eau utilisée dans l'étape de lavage d'être évacuée de la cuve de lavage (3) et de passer à travers les ailettes (10).
